# EUROPEAN PATENT SPECIFICATION

(11) **EP 4 079 782 B1**
(45) Date of publication and mention of the grant of the patent: **01.10.2025**
(21) Application number: 22168999.5
(22) Date of filing: 20.04.2022
(51) Int. Cl.: C08G 63/64, C08G 64/18

(54) **POLYOL COMPOSITION, POLYURETHANE RESIN COMPOSITION, FILM, AND LEATHER-LIKE SHEET**
POLYOLZUSAMMENSETZUNG, POLYURETHANHARZZUSAMMENSETZUNG, FILM UND LEDERÄHNLICHE FOLIE
COMPOSITION DE POLYOL, COMPOSITION DE RÉSINE DE POLYURÉTHANE, FILM ET FEUILLE SEMBLABLE AU CUIR

(30) Priority: 21.04.2021 JP 2021072114
(43) Date of publication of application: 26.10.2022
(73) Proprietor: Asahi Kasei Kabushiki Kaisha, Tokyo 1000006 (JP)
(72) Inventor: Tsukimori, Yasuyuki, Tokyo, 1000006 (JP)
(74) Representative: Strehl & Partner mbB

(56) References cited:
- US-A- 5 173 518
- US-A- 5 290 905

## Description

### Technical Field

The present invention relates to a polyol composition, a polyurethane resin composition, a film, and a leather-like sheet.

### Background Art

Polyurethane resins have heretofore been used in a wide range of fields such as synthetic leather, artificial leather, adhesives, coating materials for furniture, and coating materials for automobiles. Of starting materials of the polyurethane resins, polyether, polyester, and polycarbonate are used as polyol components to be reacted with isocyanate. However, in recent years, there has been a growing demand for durability, such as heat resistance, weather resistance, hydrolysis resistance, solvent resistance, sunscreen resistance, or scratch resistance, of polyurethane resins. Meanwhile, in the Europe, China, etc., a shift to materials that can achieve VOC reduction is being promoted with the aim of reducing environmental load.

According to "Case Studies of Polyurethane Material Selection, Structure Control and Modification" published by Technical Information Institute Co., Ltd., 1st edition issued in December 2014, pp. 51-62, in general, polyether polyol as a polyol component has low viscosity. Hence, polyurethane obtained using polyether polyol is reportedly excellent in flexibility and hydrolysis resistance but inferior in heat resistance or weather resistance. Polyurethane obtained using polyester polyol is inferior in hydrolysis resistance, though heat resistance and weather resistance are improved. By contrast, polyurethane obtained using polycarbonate polyol has the best tough grade in terms of durability such as heat resistance, chemical resistance, and hydrolysis resistance.

For example, Japanese Patent Laid-Open No. 3-252420 discloses a method for producing copolymerized polycarbonate diol economically and conveniently. For example, Japanese Patent Laid-Open No. 2006-124486 discloses a polycarbonate diol/polyether block copolymer.

US 5 173 518 A discloses, in an example, a polyether polycarbonate diol having a number-average molecular weight of 1970, obtained from diethylcarbonate and polyoxytetramethylenediol.

US 5 290 905 A discloses the preparation of a polyesterpolycarbonate diol having a molecular weight of 1500 from a mixture of 3-methyl-1,5-pentanediol and 1,6-hexanediol, 1,10-decanedicarboxylic acid and ethylene carbonate, and the preparation of a polycarbonate diol having a molecular weight of 1550 from a mixture of 2-methyl-1,8-octanediol and 1,9-nonaediol and diphenyl carbonate.

### Summary of Invention

### Problems to be Solved by Invention

However, polycarbonate polyol, when used alone, has high viscosity as compared with other polyols. Therefore, the viscosity of polycarbonate polyol is generally decreased using an organic solvent in order to facilitate its handling.

For example, use of polycarbonate polyol requires a large amount of a solvent for the production of coating materials or polyurethane. A polyurethane resin obtained using polycarbonate diol described in Japanese Patent Laid-Open No. 3-252420 or Japanese Patent Laid-Open No. 2006-124486 is susceptible to improvement for purposes that require strict physical properties of low-temperature flexibility and durability.

Accordingly, the present invention has been made in light of the situation described above, and an object of the present invention is to provide a carbonate group-containing polyol composition that is capable of reducing the amount of a solvent used at the time of coating material or polyurethane production, and can produce polyurethane excellent in low-temperature flexibility, chemical resistance (e.g., oleic acid resistance) and abrasion resistance.

### Means for Solving Problems

The present inventor has conducted diligent studies and consequently completed the present invention by finding that the object can be attained by using a polyol composition containing a carbonate group at a specific ratio and having a specific structure.

Specifically, the present invention includes the aspects listed in the claims.

### Advantages of Invention

The present invention is capable of reducing the amount of a solvent used at the time of coating material or polyurethane production, and can provide polyurethane excellent in low-temperature flexibility, chemical resistance and abrasion resistance.

### Mode for Carrying Out Invention

Hereinafter, the mode for carrying out the present invention (hereinafter, referred to as the "present embodiment") will be described. The present embodiment given below is an example for illustrating the present invention and does not intend to limit the present invention to the contents given below. The present invention can be carried out by making various changes or modifications therein without departing from the scope of the claims.

### <Carbonate group-containing polyol composition>

The carbonate group-containing polyol composition of the present embodiment has a number-average molecular weight of 300 to 10000 and comprises the following constituent unit (I) and the following constituent unit (II), wherein based on the total mass of the constituent unit (I) and the constituent unit (II), a content of the constituent unit (II) is 1% by mass or more and 99% by mass or less.

Constituent unit (I): a repeat unit represented by the following formula (A):

-(R¹¹-O-CO-O)ₙ₁₁- ... (A)

wherein R¹¹ is a divalent linear, branched or cyclic aliphatic, or aromatic hydrocarbon group having 2 or more and 15 or less carbon atoms, and when the number of R¹¹ is plural, R¹¹ may be the same as or different from each other; and n11 is an arbitrary integer.

Constituent unit (II): a repeat unit represented by the following formula (B):

-(R²¹-O)ₙ₂₁- ... (B)

wherein R²¹ is a divalent linear, branched or cyclic aliphatic, or aromatic hydrocarbon group having 2 or more and 20 or less carbon atoms, and when the number of R²¹ is plural, R²¹ may be the same as or different from each other; and n21 is an arbitrary integer of 2 or larger.,

The carbonate group-containing polyol composition of the present embodiment thus configured is capable of reducing the amount of a solvent used at the time of coating material or polyurethane production, and can produce polyurethane excellent in low-temperature flexibility, chemical resistance and abrasion resistance.

In the carbonate group-containing polyol composition of the present embodiment, the constituent unit (II) is a repeat unit represented by the formula (B). The constituent unit (II) being a repeat unit represented by the formula (B), the carbonate group-containing polyol composition of the present embodiment tends to be capable of further reducing the amount of a solvent used at the time of coating material or polyurethane production, and be able to provide polyurethane much superior in low-temperature flexibility, chemical resistance and abrasion resistance.

In the present embodiment, the constituent unit (I) and the constituent unit (II) can be confirmed by a method described in Examples mentioned later.

In the carbonate group-containing polyol composition of the present embodiment, the terminal structure is a terminal structure where one of the ends is bonded to a carbonate group, and the other end is bonded to a hydroxy group, a terminal structure where both ends are bonded to carbonate groups, or a terminal structure where both ends are bonded to hydroxy groups.

In the carbonate group-containing polyol composition of the present embodiment, the terminal structure may be a mixture of a terminal structure where one of the ends is bonded to a carbonate group, and the other end is bonded to a hydroxy group, and a terminal structure where both ends are bonded to carbonate groups.

Hereinafter, the repeat unit represented by the formula (A) will be described in detail. (R¹¹)

In the formula (A), R¹¹ is a divalent linear, branched or cyclic aliphatic, or aromatic hydrocarbon group having 2 or more and 15 or less carbon atoms. When the number of R¹¹ is plural, R¹¹ may be the same as or different from each other.

The divalent linear aliphatic hydrocarbon group represented by R¹¹ has 2 or more and 15 or less, preferably 3 or more and 12 or less, more preferably 3 or more and 10 or less carbon atoms.

Specific examples of the divalent linear aliphatic hydrocarbon group represented by R¹¹ include, but are not particularly limited to, an ethylene group, a trimethylene group, a tetramethylene group, a pentamethylene group, a hexamethylene group, a heptylene group, and an octylene group.

The divalent branched aliphatic hydrocarbon group represented by R¹¹ has 3 or more and 15 or less, preferably 3 or more and 12 or less, more preferably 3 or more and 10 or less carbon atoms.

Specific examples of the divalent branched aliphatic hydrocarbon group represented by R¹¹ include, but are not particularly limited to, an isopropylene group, an isobutylene group, a tert-butylene group, an isopentylene group, a 2,2-dimethyltrimethylene group, an isohexylene group, an isoheptylene group, and an isooctylene group.

The divalent cyclic aliphatic hydrocarbon group represented by R¹¹ has 3 or more and 15 or less, preferably 6 or more and 15 or less, more preferably 6 or more and 10 or less carbon atoms.

Specific examples of the divalent cyclic aliphatic hydrocarbon group represented by R¹¹ include, but are not particularly limited to, a cyclobutylene group, a cyclopentylene group, a cyclohexylene group, and a cycloheptylene group.

The divalent aromatic hydrocarbon group represented by R¹¹ has 6 or more and 15 or less, preferably 6 or more and 12 or less, more preferably 6 or more and 10 or less carbon atoms.

Specific examples of the divalent aromatic hydrocarbon group represented by R¹¹ include, but are not particularly limited to, a phenylene group and a naphthylene group.

Among others, R¹¹ is preferably a divalent linear aliphatic hydrocarbon group having 3 or more and 10 or less carbon atoms or a divalent branched aliphatic hydrocarbon group having 3 or more and 10 or less carbon atoms, more preferably a divalent linear aliphatic hydrocarbon group having 4 or more and 6 or less carbon atoms, still more preferably a butylene group and a hexylene group as a divalent linear aliphatic hydrocarbon group.

At least a portion of the carbonate group-containing polyol composition of the present embodiment preferably has a repeat unit represented by the formula (A) wherein R¹¹ is at least two or more selected from the group consisting of divalent linear and branched aliphatic hydrocarbon groups having 2 or more and 15 or less carbon atoms. In this case, a carbonate group-containing polyol composition that is liquid at ordinary temperature tends to be obtained.

In the present embodiment, the composition of R¹¹ in the repeat unit represented by the formula (A) in the carbonate group-containing polyol composition can be determined by the following method.

First, 1 g of a sample is weighed into a 100 ml eggplant-shaped flask, in which 30 g of ethanol and 4 g of potassium hydroxide are then placed to obtain a mixture. The obtained mixture is heated for 1 hour in an oil bath of 100°C. The mixture is cooled to room temperature. Then, one to two drops of phenolphthalein are added as an indicator to the mixture, which is then neutralized with hydrochloric acid. Then, the mixture is cooled in a refrigerator for 3 hours, and a precipitated salt is filtered off, followed by the analysis of the filtrate by gas chromatography (hereinafter, referred to as GC) under analysis conditions given below. The composition of R¹¹ in the repeat unit represented by the formula (A) in the carbonate group-containing polyol composition can be determined on the basis of the area value of a diol compound obtained by the GC analysis.

### (n11)

In the formula (A), n11 represents the number of repeats of the carbonate structure (-R¹¹-O-CO-O-). n11 is an arbitrary integer, and the average value of n11 in the whole carbonate group-containing polyol composition of the present embodiment is preferably in the range of 1 or larger and 50 or smaller, more preferably in the range of 2 or larger and 50 or smaller, further preferably in the range of 2 or larger and 30 or smaller, particularly preferably in the range of 3 or larger and 20 or smaller.

n11 can be determined by isolating the starting material diol component, if necessary, through the alkali decomposition of the carbonate group-containing polyol composition, and subjecting the component to GC-MS measurement, LC-MS measurement, NMR measurement and GPC measurement.

Hereinafter, the repeat unit represented by the formula (B) will be described in detail.

### (R²¹)

In the formula (B), R²¹ is a divalent linear, branched or cyclic aliphatic, or aromatic hydrocarbon group having 2 or more and 20 or less carbon atoms. When the number of R²¹ is plural, R²¹ may be the same as or different from each other.

The divalent linear aliphatic hydrocarbon group represented by R²¹ has 2 or more and 20 or less, preferably 2 or more and 12 or less, more preferably 3 or more and 6 or less carbon atoms. When the divalent linear aliphatic hydrocarbon group represented by R²¹ has 3 or more carbon atoms, polyurethane much superior in low-temperature flexibility, chemical resistance and abrasion resistance tends to be able to be provided.

Specific examples of the divalent linear aliphatic hydrocarbon group represented by R²¹ include, but are not particularly limited to, an ethylene group, a trimethylene group, a tetramethylene group, a pentamethylene group, a hexamethylene group, a heptylene group, and an octylene group.

The divalent branched aliphatic hydrocarbon group represented by R²¹ has 3 or more and 20 or less, preferably 3 or more and 12 or less, more preferably 3 or more and 6 or less carbon atoms.

Specific examples of the divalent branched aliphatic hydrocarbon group represented by R²¹ include, but are not particularly limited to, an isopropylene group, an isobutylene group, a tert-butylene group, an isopentylene group, a 2,2-dimethyltrimethylene group, an isohexylene group, an isoheptylene group, and an isooctylene group.

The divalent cyclic aliphatic hydrocarbon group represented by R²¹ has 6 or more and 20 or less, preferably 6 or more and 15 or less, more preferably 6 or more and 8 or less carbon atoms.

Specific examples of the divalent cyclic aliphatic hydrocarbon group represented by R²¹ include, but are not particularly limited to, a cyclobutylene group, a cyclopentylene group, a cyclohexylene group, and a cycloheptylene group.

The divalent aromatic hydrocarbon group represented by R²¹ has 6 or more and 15 or less, preferably 6 or more and 12 or less, more preferably 6 or more and 10 or less carbon atoms.

Specific examples of the divalent aromatic hydrocarbon group represented by R²¹ include, but are not particularly limited to, a phenylene group and a naphthylene group.

Among others, R²¹ is preferably a divalent linear, branched or cyclic aliphatic hydrocarbon group having 2 or more and 20 or less carbon atoms **(i.e.,** an alkylene group), more preferably a divalent linear aliphatic hydrocarbon group having 2 or more and 6 or less carbon atoms, and/or a divalent branched aliphatic hydrocarbon group having 3 or more and 6 or less carbon atoms. Particularly, when R²¹ contains a divalent branched aliphatic hydrocarbon group, polyurethane much superior in low-temperature characteristics and durability such as chemical resistance and moist heat resistance tends to be obtained.

### (n21)

In the formula (B), n21 represents the number of repeats of the structure (-R²¹-O-). In the formula (B), n21 is an arbitrary integer, and the average value of n21 in the whole carbonate group-containing polyol composition of the present embodiment is 11 or larger, preferably in the range of 12 or larger and 70 or smaller, more preferably in the range of 12 or larger and 60 or smaller, particularly preferably in the range of 15 or larger and 50 or smaller.

When the average value of n21 in the whole carbonate group-containing polyol composition of the present embodiment is equal to or larger than the lower limit value described above, polyurethane much superior in flexibility and low-temperature flexibility tends to be obtained. When the average value of n21 in the whole carbonate group-containing polyol composition of the present embodiment is equal to or smaller than the upper limit value described above, the carbonate group-containing polyol composition tends to have lower viscosity.

n21 described above can be determined by isolating the starting material diol component, if necessary, through the alkali decomposition of the carbonate group-containing polyol composition, and subjecting the component to GC-MS measurement, LC-MS measurement, NMR measurement and GPC measurement.

Among others, the repeat unit represented by the formula (B) is preferably a polyoxyalkylene structure.

Specific examples of the preferred oxyalkylene group contained in the formula (B) include, but are not particularly limited to, an oxyethylene group, an oxy-1-methylethylene group, an oxytetramethylene group, and an oxy-2,2-dimethyltrimethylene group. Among others, a structure containing an oxy-1-methylethylene group is preferred, and an oxy-1-methylethylene group and an oxyethylene group are particularly preferred. When the preferred oxyalkylene group contained in the formula (B) is the structure described above, the carbonate group-containing polyol composition becomes liquid at ordinary temperature by the introduction of a side chain methyl group and is thus excellent in workability. Furthermore, the resulting polyurethane tends to be rich in flexibility and low-temperature characteristics.

Examples of the method for obtaining the carbonate group-containing polyol composition of the present embodiment include, but are not particularly limited to, the following methods (i) to (iii):
(i) a method of performing transesterification reaction using a compound having a repeat unit represented by the formula (A) and a compound having a repeat unit represented by the formula (B);
(ii) a method of mixing a carbonate compound mentioned later with a polyol starting material that satisfies the constituent unit (I) and a compound having a repeat unit represented by the formula (B), reacting these materials at 100 to 200°C under atmospheric pressure or reduced pressure in the presence of a transesterification catalyst, and removing the formed alcohol derived from the carbonate starting material to obtain a carbonate group-containing polyol composition having a predetermined molecular weight; and
(iii) a method of mixing a compound having a repeat unit represented by the formula (A) with a compound having a repeat unit represented by the formula (B).

In obtaining the carbonate group-containing polyol composition of the present embodiment through synthesis reaction, the reaction is usually carried out by the addition of a catalyst. The catalyst used in the present embodiment can be freely selected from a usual transesterification reaction catalyst. Examples of the transesterification reaction catalyst used include, but are not particularly limited to, metals such as lithium, sodium, potassium, rubidium, cesium, magnesium, calcium, strontium, barium, zinc, aluminum, titanium, cobalt, germanium, tin, lead, antimony, arsenic, and cerium, salts, alkoxide, and organic compounds. A compound of titanium, magnesium, tin, or lead is particularly preferred. The amount of the catalyst used is 0.00001 to 0.1% by mass based on the mass of carbonate group-containing polyol.

In the carbonate group-containing polyol composition of the present embodiment, the content of the constituent unit (II) is 1% by mass or more and 99% by mass or less, preferably 40% by mass or more and 95% by mass or less, more preferably 45% by mass to 90% by mass, further preferably 50 to 85% by mass, based on the total mass of the constituent unit (I) and the constituent unit (II). Particularly, the lower limit of the content of the constituent unit (II) is preferably 52% by mass or more.

When the content of the constituent unit (II) is equal to or more than the lower limit value described above based on the total mass of the constituent unit (I) and the constituent unit (II), the flexibility of the resulting polyurethane is improved. When the content of the constituent unit (II) is equal to or less than the upper limit value described above based on the total mass of the constituent unit (I) and the constituent unit (II), the chemical resistance and abrasion resistance of the resulting polyurethane are improved.

In the present embodiment, the contents of the constituent unit (I) and the constituent unit (II) can be measured by a method described in Examples mentioned later.

The number-average molecular weight of the carbonate group-containing polyol composition of the present embodiment is 300 to 10000, preferably 400 to 5000, more preferably 450 to 3500. When the number-average molecular weight of the carbonate group-containing polyol composition is equal to or more than the lower limit value described above, the flexibility of the resulting polyurethane is improved. When the number-average molecular weight of the carbonate group-containing polyol composition is equal to or less than the upper limit value described above, the abrasion resistance and chemical resistance of the resulting polyurethane are improved.

Examples of the method for controlling the number-average molecular weight of the carbonate group-containing polyol composition of the present embodiment within the range described above include, but are not particularly limited to, a method using a constituent unit (I) and a constituent unit (II) having a number-average molecular weight controlled within the range described above, a method using a constituent unit (I) having a number-average molecular weight larger than the range described above and a constituent unit (II) having a number-average molecular weight smaller than the range described above, and a method of performing the reaction of the method (ii) while confirming the number-average molecular weight, and terminating the reaction when the number-average molecular weight reached the range described above.

In the present embodiment, the number-average molecular weight of the carbonate group-containing polyol composition can be calculated from the hydroxy value of the carbonate group-containing polyol composition by use of a method described in Examples mentioned later.

### <Constituent unit (I)>

The constituent unit (I) of the carbonate group-containing polyol composition of the present embodiment is a repeat unit represented by the formula (A). The constituent unit (I) can be obtained, for example, but not particularly limited to, by reacting each polyol as shown below with a carbonate compound typified by ethylene carbonate, dimethyl carbonate, diethyl carbonate, or diphenyl carbonate. The method for reacting these compounds is not particularly limited.

One example of the method for reacting these compounds includes, but is not particularly limited to, a method of mixing the carbonate compound mentioned above with polyol mentioned later, reacting these materials at 100 to 200°C under atmospheric pressure or reduced pressure in the presence of a transesterification catalyst, and removing the formed alcohol derived from the carbonate compound to obtain low-molecular-weight polycarbonate polyol, followed by heating at 160 to 250°C under reduced pressure so that the low-molecular-weight polycarbonate polyol is condensed while an unreacted carbonate compound and polyol are removed.

Examples of the polyol starting material that forms the constituent unit (I) include, but are not particularly limited to, diol having no side chain, such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, and 1,14-tetradecanediol, diol having a side chain, such as 2-methyl-1, 8-octanediol, 2-ethyl-1,6-hexanediol, 2-methyl-1,3-propanediol, 3-methyl-1,5-pentanediol, 2,4-dimethyl-1,5-pentanediol, 2,4-diethyl-1, 5-pentanediol, 2-butyl-2-ethyl-1,3-propanediol, and 2,2-dimethyl-1,3-propanediol, and cyclic diol such as 1,4-cyclohexanedimethanol and 2-bis(4-hydroxycyclohexyl)-propane, one type or two or more types of which can be used.

A compound having three or more hydroxyl groups in one molecule, for example, trimethylolethane, trimethylolpropane, hexanetriol, or pentaerythritol, may be used in a small amount. Use of this compound having three or more hydroxyl groups in one molecule in too large an amount might cause gelation through crosslinking during reaction. Thus, the amount of the compound having three or more hydroxyl groups in one molecule is preferably 0.01 to 5% by mass, more preferably 0.01 to 1% by mass, based on the total amount of aliphatic diol and/or alicyclic diol.

The starting material of the constituent unit (I) used in the present embodiment is preferably 1,3-propanediol, 1,4-butanediol, 1,5-pentanediol, 1,6-hexanediol, 1,7-heptanediol, 1,8-octanediol, 1,9-nonanediol, 1,10-decanediol, 2-methyl-1,3-propanediol, or 3-methyl-1,5-pentanediol, particularly preferably 1,3-propanediol, 1,4-butanediol, 1,5-pentanediol, 1,6-hexanediol, 1,9-nonanediol, 1,10-decanediol, 2-methyl-1,3-propanediol, or 3-methyl-1,5-pentanediol.

### <Constituent unit (II)>

The constituent unit (II) of the carbonate group-containing polyol composition of the present embodiment is a repeat unit represented by the formula (B).

Examples of the starting material that forms the repeat unit represented by the formula (B) include, but are not particularly limited to, polyether polyol. The polyether polyol is not particularly limited as long as the polyether polyol is polyol having an ether bond in the molecule. The polyether polyol may contain a carbonate bond and/or an ester bond without impairing its functions or characteristics. The polyether polyol is preferably, for example, a compound having an etherbonded alkylene group obtained by the ring-opening polymerization of cyclic ether or the ring-opening polymerization of an epoxy compound.

The number of carbon atoms in the main chain of the polyether polyol is not particularly limited. The main chain preferably has 2 to 4 carbon atoms from the viewpoint of easy availability. A smaller content of an oxygen atom is more preferred from the viewpoint of suppressing reduction in water resistance caused by the water absorption of polyurethane. Thus, the main chain more preferably has 3 or 4 carbon atoms.

Specific examples of the polyether polyol include, but are not particularly limited to: polytetramethylene ether glycol, polypropylene glycol, polyethylene glycol, and copolymers of two or more thereof; and random copolymers and block copolymers of ethylene oxide and propylene oxide, and random copolymers and block copolymers of ethylene oxide and butylene oxide. Among others, polytetramethylene ether glycol, polytetramethylene ether glycol having an alkyl side chain, polypropylene glycol, polyethylene glycol, and copolymers of two or more thereof, etc. are preferred.

### <Purpose>

The carbonate group-containing polyol composition of the present embodiment can be used as a starting material of a polyurethane for reaction with polyisocyanate. The polyurethane obtained using the carbonate group-containing polyol composition of the present embodiment is excellent in chemical resistance, heat resistance, and weather resistance and can therefore be widely used in, for example, foams, elastomers, coating materials, coating agents, pressure-sensitive adhesives, adhesives, artificial leather, synthetic leather, and aqueous polyurethane coating materials.

### <Polyurethane resin composition>

The polyurethane resin composition of the present embodiment is prepared using the carbonate group-containing polyol composition mentioned above, a compound having a plurality of isocyanate groups, and at least one chain extender selected from the group consisting of polyol and polyamine.

The method for producing the polyurethane resin composition of the present embodiment employs usual polyurethanization reaction conditions known in the art for producing polyurethane.

Examples of the method for producing the polyurethane resin composition of the present embodiment include, but are not particularly limited to, a method of mixing the carbonate group-containing polyol composition mentioned above, other polyols, polyisocyanate and a chain extender in one lump for reaction (hereinafter, also referred to as a "one-shot method"), and a method of first reacting the carbonate group-containing polyol composition mentioned above, other polyols and polyisocyanate to prepare a prepolymer having isocyanate groups at both ends, and then reacting the prepolymer with a chain extender (hereinafter, also referred to as a "prepolymer method").

### <Compound having isocyanate groups>

The compound having a plurality of isocyanate groups for use in the polyurethane resin composition of the present embodiment is not particularly limited as long as the compound works as a curing agent. An isocyanate compound having two or more terminal isocyanate groups is used.

Examples of such an isocyanate compound include, but are not particularly limited to, chain aliphatic diisocyanate, cyclic aliphatic diisocyanate, aromatic diisocyanate, and isocyanate compounds having three or more isocyanate groups, and isocyanurate-modified products and biuret-modified products of these isocyanate compounds.

Examples of the chain aliphatic diisocyanate include, but are not particularly limited to, hexamethylene diisocyanate and trimethylhexamethylene diisocyanate.

Examples of the cyclic aliphatic diisocyanate include, but are not particularly limited to, isophorone diisocyanate.

Examples of the aromatic diisocyanate include, but are not particularly limited to, tolylene diisocyanate, 4,4'-diphenylmethane diisocyanate (hereinafter, also abbreviated to "MDI"), xylylene diisocyanate and naphthylene diisocyanate.

Examples of the isocyanate compound having three or more isocyanate groups include, but are not particularly limited to, triphenylmethane-4,4'-4"-triisocyanate, 1,3,5-triisocyanatobenzene, 2,4,6-triisocyanatotoluene and 4,4'-dimethyldiphenylmethane-2,2',5,5'-tetraisocyanate.

A commercially available product may be used as the isocyanate compound, or the isocyanate compound may be synthesized by use of a method known in the art.

The amount of the isocyanate compound used can be appropriately adjusted according to the molar quantity of a hydroxy group in the base agent polyol. Specifically, the molar ratio (NCO/OH) of an isocyanate group in the isocyanate compound to a hydroxy group in the polyol (for example, the polycarbonate diol) can be, for example, 0.2 or more and 5.0 or less, can be, for example, 0.4 or more and 3.0 or less, and can be, for example, 0.5 or more and 2.0 or less. When NCO/OH is equal to or more than the lower limit value described above, a stronger coating film tends to be obtained. On the other hand, when NCO/OH is equal to or less than the upper limit value described above, the smoothness of a coating film tends to be better.

### <Chain extender>

Examples of the chain extender for use in producing the polyurethane resin composition of the present embodiment usually include, but are not particularly limited to, polyol and polyamine.

Examples of the polyol include, but are not particularly limited to, linear diol, branched diol, cyclic diol, and diol having an aromatic ring.

Examples of the linear diol include, but are not particularly limited to, ethylene glycol, 1,3-propanediol, 1,5-pentanediol, 1,6-hexanediol, 1,7-heptanediol, 1,8-octanediol, 1,9-nonanediol, 1,10-decanediol, 1,11-undecanediol, and 1,12-dodecanediol.

Examples of the branched diol include, but are not particularly limited to, 2-methyl-1,8-octanediol, neopentyl glycol, 2-ethyl-1,6-hexanediol, 2-methyl-1,3-propanediol, 3-methyl-1,5-pentanediol, 2,4-dimethyl-1,5-pentanediol, and 2,4-diethyl-1,5-pentanediol.

Examples of the cyclic diol include, but are not particularly limited to, 1,3-cyclohexanediol, 1,4-cyclohexanediol, 1,4-cyclohexanedimethanol, and 2-bis(4-hydroxycyclohexyl)-propane.

Examples of the diol having an aromatic ring include, but are not particularly limited to, p-xylenediol, p-tetrachloroxylenediol, 1,4-bis(hydroxyethoxy)benzene, and 2,2-bis[(4-hydroxyethoxy)phenyl]propane.

Examples of the polyamine include, but are not particularly limited to, hydroxyamines and polyamines.

Examples of the hydroxyamines include, but are not particularly limited to, N-methylethanolamine and N-ethylethanolamine.

Examples of the polyamines include, but are not particularly limited to, ethylenediamine, 1,3-diaminopropane, hexamethylenediamine, triethylenetetramine, diethylenetriamine, isophoronediamine, 4,4'-diaminodicyclohexylmethane, 2-hydroxyethylpropylenediamine, di-2-hydroxyethylethylenediamine, di-2-hydroxyethylpropylenediamine, 2-hydroxypropylethylenediamine, di-2-hydroxypropylethylenediamine, 4,4'-diphenylmethanediamine, methylenebis(o-chloroaniline), xylylenediamine, diphenyldiamine, tolylenediamine, hydrazine, piperazine, and N,N'-diaminopiperazine.

These chain extenders may be used singly or may be used in combination of two or more thereof.

### <Film>

The film of the present embodiment is formed from the polyurethane resin composition mentioned above. Specifically, the film of the present embodiment can be formed, for example, by applying the polyurethane resin composition mentioned above to a base material, followed by drying.

Examples of the base material include, but are not particularly limited to, fibrous base materials made of nonwoven fabrics, fabrics, knit, or the like, and resin films. Examples of the constituent of the fibrous base material include, but are not particularly limited to: chemical fibers such as polyester fibers, nylon fibers, acrylic fibers, polyurethane fibers, acetate fibers, rayon fibers, and polylactic acid fibers; and cotton, linen, silk, wool, and blend fibers thereof. Examples of the resin film include, but are not particularly limited to, polyethylene terephthalate films, polycarbonate films, acrylic resin films, COP (cycloolefin polymer) films, and TAC (triacetylcellulose) films.

The surface of the base material may be treated, if necessary, by antistatic processing, mold release processing, water repelling processing, water absorption processing, antimicrobial deodorization processing, antibacterial processing, ultraviolet blocking processing, or the like.

Examples of the method for applying the polyurethane resin composition mentioned above to the base material include, but are not particularly limited to, application methods using applicators, bar coaters, knife coaters, T-die coaters, roll coaters, or the like.

Examples of the method for drying the applied polyurethane resin composition include a method of performing drying at a temperature of 50 to 140°C for 30 seconds to 10 minutes.

The thickness of the film of the present embodiment is appropriately determined according to the purpose used and is, for example, in the range of 0.001 to 10 mm.

### <Leather-like sheet>

The leather-like sheet of the present embodiment has the film mentioned above.

For obtaining the leather-like sheet using the film mentioned above, it is preferred that the film should serve as an adhesive layer, a surface layer, or a surface-treated layer of the leather-like sheet.

Examples of the method for producing the leather-like sheet of the present embodiment include, but are not particularly limited to, a method of laminating a surface-treated layer formed on a release paper with the film mentioned above by a method known in the art. Examples of the material that forms the surface-treated layer include, but are not particularly limited to, solvent-based urethane resin, aqueous urethane resin, and aqueous acrylic resin. In the lamination, an adhesive known in the art may be used, if necessary.

As described above, the carbonate group-containing polyol composition of the present embodiment can provide a polyurethane resin composition excellent in flexibility, chemical resistance and abrasion resistance. Accordingly, such a polyurethane resin composition can be suitably used as a material for use in the production of leather-like sheets such as synthetic leather and artificial leather, apparel, support pads, polishing pads, and the like, and can be particularly suitably used as a material for leather-like sheets.

### EXAMPLES

Hereinafter, the present embodiment will be described in more detail with reference to Examples, etc. However, the present embodiment is not limited by these examples by any means. Analysis methods and physical property evaluation in Examples and Comparative Examples given below were carried out by the following testing methods.

### <Hydroxy value>

The hydroxy value of carbonate group-containing polyol (composition) was measured by the following method.

First, a volumetric flask was used, and pyridine was added to 12.5 g of acetic anhydride so as to bring the amount to 50 mL, to prepare an acetylation reagent. Subsequently, in a 100 mL eggplant-shaped flask, 2.5 g of a sample was weighed. Subsequently, to the eggplant-shaped flask, 5 mL of the acetylation reagent and 10 mL of toluene were added with a whole pipette. Then, a condenser was attached to the flask, and the solution in the eggplant-shaped flask was stirred and heated at 100°C for 1 hour. Subsequently, to the eggplant-shaped flask, 2.5 mL of distilled water was added with a whole pipette, and then, the solution in the eggplant-shaped flask was further heated and stirred for 10 minutes. After cooling of the solution in the eggplant-shaped flask for 2 to 3 minutes, to the eggplant-shaped flask, 12.5 mL of ethanol was added. Subsequently, to the eggplant-shaped flask, 2 to 3 drops of phenolphthalein were added as an indicator, followed by titration with 0.5 mol/L ethanolic potassium hydroxide. Subsequently, in a 100 mL eggplant-shaped flask, 5 mL of the acetylation reagent, 10 mL of toluene and 2.5 mL of distilled water were placed, and the solution in the eggplant-shaped flask was heated and stirred for 10 minutes, followed by titration in the same way as above (blank test). On the basis of the results, the hydroxy value of the carbonate group-containing polyol (composition) was calculated according to the following expression (i): Hydroxy value (mg-KOH/g) = {(F - E) × 28.05 × f}/ G

In the expression (i), E represents the amount of the sample titrated (mL); F represents the amount titrated (mL) in the blank test; G represents the mass of the sample (g); and f represents the factor of the titration solution.

### <Number-average molecular weight(A)>

The number-average molecular weight (A) of polycarbonate diol obtained in each of Synthesis Examples mentioned later or carbonate group-containing polyol (composition) obtained in each of Examples and Comparative Examples mentioned later was calculated from the hydroxy value determined by the method mentioned above according to the following expression (ii): Number-average molecular weight (A) = 2 / (H × 10-3/ 56.11)

In the expression (ii), H represents the hydroxy value (mg-KOH/g) of the carbonate group-containing polyol (composition).

### <Content of constituent unit (II)>

The content of the constituent unit (II) based on the total mass of the constituent unit (I) and the constituent unit (II) was determined by isolating a starting material component through the alkali decomposition of a carbonate group-containing polyol composition, and subjecting the component to GC-MS measurement, LC-MS measurement, and GPC measurement, and by dissolving a carbonate group-containing polyol composition in CDCl₃, followed by measurement by 400 MHz ¹H-NMR (AL-400 manufactured by JEOL Ltd.).

The constituent unit (I) and the constituent unit (II) in the carbonate group-containing polyol composition were also confirmed by this measurement method.

### <Measurement of molecular weight>

A portion of a polyurethane film obtained in each of Application Examples and Application Comparative Examples mentioned later was cut out, and a N,N-dimethylformamide solution was prepared so as to have a polyurethane concentration of 0.1% by mass. The number-average molecular weight (Mn) based on standard polystyrene was measured using a GPC apparatus [manufactured by Tosoh Corp., product name "HLC-8320" (column: Tskgel SuperHM-H, 4 columns); a solution containing 2.6 g lithium bromide dissolved in 1 L of dimethylformamide was used as an eluent].

### <Low-temperature flexibility of polyurethane film>

A strip of a test specimen having a width of 10 mm, a length of 100 mm, and a thickness of approximately 0.1 mm was prepared from a polyurethane film obtained in each of Application Examples and Application Comparative Examples mentioned later in accordance with JIS K6250 (2019). The prepared test specimen was loaded at a distance between chucks of 20 mm in a tensile tester (manufactured by Orientec Co., Ltd., product name "Tensilon, model RTE-1210"). Subsequently, the test specimen was left standing at -20°C for 5 minutes. Then, a tensile test was conducted at a pulling rate of 100 mm/min, and low-temperature flexibility was evaluated on the basis of the following evaluation criteria from stress when the test specimen was stretched by 100% (100% modulus).

### (Evaluation criteria)

○: 100% modulus of less than 12.0 MPa
△: 100% modulus of 12.0 MPa or more and less than 18.0 MPa
×: 100% modulus of 18.0 MPa or more

### <Chemical resistance of polyurethane film>

Oleic acid resistance was evaluated as chemical resistance using oleic acid.

A cotton ball of 10 mm in diameter impregnated with oleic acid was placed for 1 minute on a polyurethane film obtained in each of Application Examples and Application Comparative Examples mentioned later, and the solvent remaining on the surface was removed. Then, the state of the coating film was observed. An assessment method was as follows.
○: Transparent and not depressed
△: Slightly white turbid or slightly depressed
×: White turbid or repressed

### <Abrasion resistance of polyurethane film>

The abrasion resistance of a polyurethane film obtained in each of Application Examples and Application Comparative Examples mentioned later was measured using a Taber type abrasion tester in accordance with the method of JIS K5600-5-8. The abrasion resistance was evaluated on the basis of the following evaluation criteria from change in mass (mg) between the mass of the polyurethane film (including a glass plate) before the abrasion test and the mass of the polyurethane film (including the glass plate) after the abrasion test (500 rotations).

### (Evaluation criteria)

O: Change in mass of less than 1.5 mg
△: Change in mass of 1.5 mg or more and less than 3.0 mg
×: Change in mass of 3.0 mg or more

### <Low-temperature characteristics (glass transition temperature) of polyurethane film>

A test specimen having a width of 10 mm, a length of 40 mm, and a thickness of 0.4 mm was cut out of a polyurethane film obtained in each of Application Examples and Application Comparative Examples mentioned later. The test specimen was loaded at a distance between chucks of 20 mm in a viscoelasticity measurement apparatus (manufactured by Hitachi High-Tech Science Corp., [TA7000 series, DMA7100]). Viscoelasticity was measured while the temperature was elevated from -100°C to 100°C at 5°C/min. The peak of tanδ was read to determine the glass transition temperature (Tg) of the polyurethane film. A lower glass transition temperature (Tg) was evaluated as better low-temperature characteristics.

### [Synthesis Example 1] Production of polycarbonate diol P-1

A 1 L glass flask (hereinafter, also referred to as a "reactor") equipped with a rectifying column packed with a regular packing material, and a stirring apparatus was charged with 275 g of 2-methyl-1,3-propanediol, 212 g of 1,4-butanediol, and 476 g of ethylene carbonate. Then, 0.097 g of titanium tetra-n-butoxide was placed therein as a catalyst. While the reactor was dipped in an oil bath of 170°C and a portion of the distillate was extracted, the mixture was reacted at a reaction temperature of 155°C for 25 hours. Subsequently, the reactor was connected directly to a condenser. The temperature of the oil bath was raised to 170°C. Then, the pressure was gradually lowered, and the reaction was further performed for 5 hours to obtain polycarbonate diol P-1 (577 g) which was liquid at ordinary temperature.

The hydroxy value of the obtained polycarbonate diol P-1 was 53.0 mgKOH/g. The number-average molecular weight of the obtained polycarbonate diol P-1 was 2117.

### [Synthesis Example 2] Production of polycarbonate diol P-2

The same apparatus as in Synthesis Example 1 described above was used and charged with 536 g of 1,6-hexanediol and 400 g of ethylene carbonate. Then, 0.048 g of titanium tetra-n-butoxide was placed therein as a catalyst. While the reactor was dipped in an oil bath of 180°C and a portion of the distillate was extracted, the mixture was reacted at a reaction temperature of 165°C for 12 hours. Subsequently, the reactor was connected directly to a condenser. The temperature of the oil bath was raised to 180°C. Then, the pressure was gradually lowered, and the reaction was further performed for 3 hours to obtain polycarbonate diol P-2 (468 g) which was solid at ordinary temperature. The hydroxy value of the obtained polycarbonate diol P-2 was 55.2 mgKOH/g. The number-average molecular weight of the obtained polycarbonate diol P-2 was 2033.

### [Synthesis Example 3] Production of polycarbonate diol P-3

The same apparatus as in Synthesis Example 1 described above was used and charged with 335 g of 1,4-butanediol, 195 g of 1,10-decanediol, and 405 g of dimethyl carbonate. Then, 0.093 g of titanium tetra-n-butoxide was placed therein as a catalyst. While the reactor was dipped in an oil bath of 170°C and a portion of the distillate was extracted, the mixture was reacted at a reaction temperature of 160°C for 10 hours. Subsequently, the reactor was connected directly to a condenser. The temperature of the oil bath was raised to 185°C. Then, the pressure was gradually lowered, and the reaction was further performed for 2 hours to obtain polycarbonate diol P-3 (399 g) which was a wax (solid) at ordinary temperature. The hydroxy value of the obtained polycarbonate diol P-3 was 56.3 mgKOH/g. The number-average molecular weight of the obtained polycarbonate diol P-3 was 1992.

### [Synthesis Example 4] Production of polycarbonate diol P-4

The same apparatus as in Synthesis Example 1 described above was used and charged with 270 g of 1,6-hexanediol, 250 g of 1,4-butanediol, and 445 g of ethylene carbonate. Then, 0.112 g of magnesium acetate tetrahydrate was placed therein as a catalyst. While the reactor was dipped in an oil bath of 140 to 160°C and a portion of the distillate was extracted, the mixture was reacted at a reaction temperature of 90 to 160°C for 20 hours. Subsequently, the reactor was connected directly to a condenser. The temperature of the oil bath was raised to 180°C. Then, the pressure was gradually lowered, and the reaction was further performed for 8 hours to obtain polycarbonate diol P-4 (462 g) which was liquid at ordinary temperature. The hydroxy value of the obtained polycarbonate diol P-4 was 55.8 mgKOH/g. The number-average molecular weight of the obtained polycarbonate diol P-4 was 2010.

### [Synthesis Example 5] Production of polycarbonate diol P-5

The same apparatus as in Synthesis Example 1 described above was used and charged with 230 g of 1,5-pentanediol, 250 g of 1,6-hexanediol, and 400 g of ethylene carbonate. Then, 0.047 g of titanium tetra-n-butoxide was placed therein as a catalyst. While the reactor was dipped in an oil bath of 180°C and a portion of the distillate was extracted, the mixture was reacted at a reaction temperature of 165°C for 12 hours. Subsequently, the reactor was connected directly to a condenser. The temperature of the oil bath was raised to 180°C. Then, the pressure was gradually lowered, and the reaction was further performed for 3 hours to obtain polycarbonate diol P-5 (466 g) which was liquid at ordinary temperature. The hydroxy value of the obtained polycarbonate diol P-5 was 55.2 mgKOH/g. The number-average molecular weight of the obtained polycarbonate diol P-5 was 2033.

### [Synthesis Example 6] Production of polycarbonate diol P-6

The same apparatus as in Synthesis Example 1 described above was used and charged with 383 g of 1,3-propanediol and 444 g of ethylene carbonate. Then, 0.041 g of titanium tetra-n-butoxide was placed therein as a catalyst. While the reactor was dipped in an oil bath and a portion of the distillate was extracted, the mixture was reacted at a reaction temperature of 160 to 175°C for 18 hours. Subsequently, the reactor was connected directly to a condenser. The temperature of the oil bath was raised to 185°C. Then, the pressure was gradually lowered, and the reaction was further performed for 6 hours to obtain polycarbonate diol P-6 (290 g) which was liquid at ordinary temperature.

The hydroxy value of the obtained polycarbonate diol P-6 was 56.2 mgKOH/g. The number-average molecular weight of the obtained polycarbonate diol P-6 was 1996.

### [Synthesis Example 7] Production of polycarbonate diol P-7

The same apparatus as in Synthesis Example 1 described above was used and charged with 255 g of 3-methyl-1,5-pentanediol, 254 g of 1,6-hexanediol, and 380 g of ethylene carbonate. Then, 0.047 g of titanium tetra-n-butoxide was placed therein as a catalyst. While the reactor was dipped in an oil bath of 180°C and a portion of the distillate was extracted, the mixture was reacted at a reaction temperature of 165°C for 12 hours. Subsequently, the reactor was connected directly to a condenser. The temperature of the oil bath was raised to 180°C. Then, the pressure was gradually lowered, and the reaction was further performed for 3 hours to obtain polycarbonate diol P-7 (466 g) which was liquid at ordinary temperature. The hydroxy value of the obtained polycarbonate diol P-7 was 56.4 mgKOH/g. The number-average molecular weight of the obtained polycarbonate diol P-7 was 1989.

### [Example 1] Production of carbonate group-containing polyol composition A-1

A 1 L glass flask (hereinafter, also referred to as a "reactor") equipped with a stirring apparatus was charged with 270 g of the polycarbonate diol P-1 obtained in Synthesis Example 1, and 230 g of "PTMG850" (trade name, number-average molecular weight: approximately 850) manufactured by Mitsubishi Chemical Corp. Subsequently, the mixture was heated with stirring, and kept at approximately 145°C in terms of the inside temperature of the reactor for 13 hours. Subsequently, dibutyl phosphate was added in an amount of 1.3 times the mass ratio of the catalyst, and the mixture was heat-treated at 115°C in terms of the inside temperature of the reactor for 3 hours to obtain carbonate group-containing polyol composition A-1. The progression and the like of transesterification reaction was confirmed by subjecting the reaction solution to GPC measurement over time, and confirming the disappearance of peaks derived from the starting materials and the appearance of a peak derived from a product over time.

Each physical property of the obtained carbonate group-containing polyol composition A-1 was measured by the method described above. The results are shown in Table 1.

The obtained carbonate group-containing polyol composition A-1 contained a repeat unit represented by the formula (A) and a repeat unit represented by the formula (B).

### [Examples 2 to 13] (Examples 8 to 11 are reference examples)

Carbonate group-containing polyol compositions A-2 to A-13 of Examples 2 to 13 were obtained through reaction using the same conditions and method as in Example 1 except that the type of each starting material and the amount of each starting material added were each changed as described in Tables 1 and 2. Each physical property of the obtained carbonate group-containing polyol compositions A-2 to A-13 was measured by the method described above. The results are shown in Tables 1 and 2.

The obtained carbonate group-containing polyol compositions A-2 to A-13 contained a repeat unit represented by the formula (A) and a repeat unit represented by the formula (B) or the formula (C).

### [Example 14]

The same apparatus as in Example 1 described above was used and charged with 240 g of the polycarbonate diol P-4 obtained in Synthesis Example 4, and 260 g of "Newpol PE-61" (trade name, number-average molecular weight: approximately 2000) manufactured by Sanyo Chemical Industries, Ltd.

Subsequently, dibutyl phosphate was added in an amount of 1.3 times the mass ratio of the catalyst, and the mixture was heat-treated at 115°C in terms of the inside temperature of the reactor for 3 hours to obtain carbonate group-containing polyol composition A-14. No change in peaks derived from the starting materials was confirmed by subjecting the reaction solution to GPC measurement over time.

Each physical property of the obtained carbonate group-containing polyol composition A-14 was measured by the method described above. The results are shown in Table 3.

The obtained carbonate group-containing polyol composition A-14 contained a repeat unit represented by the formula (A) and a repeat unit represented by the formula (B).

### [Example 15]

The same apparatus as in Synthesis Example 1 described above was used and charged with 115 g of 1,5-pentanediol, 125 g of 1,6-hexanediol, 350 g of "Newpol PE-61" (trade name, number-average molecular weight: approximately 2000) manufactured by Sanyo Chemical Industries, Ltd., and 240 g of ethylene carbonate. Then, 0.047 g of titanium tetra-n-butoxide was placed therein as a catalyst. While the reactor was dipped in an oil bath of 180°C and a portion of the distillate was extracted, the mixture was reacted at a reaction temperature of 165°C for 8 hours. Subsequently, the reactor was connected directly to a condenser. The temperature of the oil bath was raised to 180°C. Then, the pressure was gradually lowered, and the reaction was further performed for 3 hours to obtain carbonate group-containing polyol composition P-8 (580 g).

The hydroxy value of the obtained carbonate group-containing polyol composition P-8 was 55.8 mgKOH/g. The number-average molecular weight of the obtained carbonate group-containing polyol composition P-8 was 2011. Subsequently, dibutyl phosphate was added in an amount of 1.3 times the mass ratio of titanium tetra-n-butoxide, and the mixture was heat-treated at 115°C in terms of the inside temperature of the reactor for 3 hours to obtain carbonate group-containing polyol composition A-15.

Each physical property of the obtained carbonate group-containing polyol composition A-15 was measured by the method described above. The results are shown in Table 3.

The obtained carbonate group-containing polyol composition A-15 contained a repeat unit represented by the formula (A) and a repeat unit represented by the formula (B).

### [Example 16]

The same apparatus as in Synthesis Example 1 described above was used and charged with 115 g of 1,5-pentanediol, 125 g of 1,6-hexanediol, and 350 g of "Kuraray Polyol P-2010" (trade name, number-average molecular weight: approximately 2000) manufactured by Kuraray Co., Ltd.. Then, 0.059 g of magnesium acetate tetrahydrate was placed therein as a catalyst. While the reactor was dipped in an oil bath of 180°C and a portion of the distillate was extracted, the mixture was reacted at a reaction temperature of 165°C for 8 hours. Subsequently, the reactor was connected directly to a condenser. The temperature of the oil bath was raised to 180°C. Then, the pressure was gradually lowered, and the reaction was further performed for 3 hours to obtain carbonate group-containing polyol composition P-9 (585 g).

The hydroxy value of the obtained carbonate group-containing polyol composition P-9 was 56.0 mgKOH/g. The number-average molecular weight of the obtained carbonate group-containing polyol composition P-9 was 2004. Subsequently, dibutyl phosphate was added in an amount of 1.3 times the mass ratio of magnesium acetate tetrahydrate, and the mixture was heat-treated at 115°C in terms of the inside temperature of the reactor for 3 hours to obtain carbonate group-containing polyol composition A-16.

Each physical property of the obtained carbonate group-containing polyol composition A-16 was measured by the method described above. The results are shown in Table 3.

The obtained carbonate group-containing polyol composition A-16 contained a repeat unit represented by the formula (A) and a repeat unit represented by the formula (B).

### [Examples 17 to 18] (Example 18 is a reference example)

Carbonate group-containing polyol compositions A-17 to A-18 of Examples 17 to 18 were obtained through reaction using the same conditions and method as in Example 1 except that the type of each starting material and the amount of each starting material added were each changed as described in Table 3. Each physical property of the obtained carbonate group-containing polyol compositions A-17 to A-18 was measured by the method described above. The results are shown in Table 3.

The obtained carbonate group-containing polyol composition A-17 contained a repeat unit represented by the formula (A) and a repeat unit represented by the formula (B).

The obtained carbonate group-containing polyol composition A-18 contained a repeat unit represented by the formula (A) and a repeat unit represented by the formula (C).

### [Comparative Examples 1 to 2]

Carbonate group-containing polyol compositions, etc. B-1 to B-2 of Comparative Examples 1 to 2 were obtained through reaction using the same conditions and method as in Example 1 except that the type of each starting material and the amount of each starting material added were each changed as described in Table 3. Each physical property of the obtained carbonate group-containing polyol compositions, etc. B-1 to B-2 was measured by the method described above. The results are shown in Table 3.

**[Table 1]**

| | Example 1 | Example 2 | Example 3 | Example 4 | Example 5 | Example 6 | Example 7 |
|---|---|---|---|---|---|---|---|
| Polyol composition | A-1 | A-2 | A-3 | A-4 | A-5 | A-6 | A-7 |
| P-1 (g) | 270 | | | | | | |
| P-2 (g) | | | | | | | 45 |
| P-3 (g) | | | | | | 75 | |
| P-4 (g) | | 240 | | | | | |
| P-5 (g) | | | 240 | | | | |
| P-6 (g) | | | | 150 | | | |
| P-7 (g) | | | | | 100 | | |
| P-8 (g) | | | | | | | |
| P-9 (g) | | | | | | | |
| PE-61 (g) | | | 260 | | 400 | | |
| #102 (g) | | 260 | | | | 425 | |
| PTMG850 (g) | 230 | | | | | | 455 |
| PTMG2000 (g) | | | | 350 | | | |
| N164 (g) | | | | | | | |
| P2010 (g) | | | | | | | |
| PCL208 (g) | | | | | | | |
| PCL320 (g) | | | | | | | |
| Total (g) | 500 | 500 | 500 | 500 | 500 | 500 | 500 |
| Hydroxy value [mg-KOH/g] | 89.3 | 73.5 | 55.7 | 56.1 | 56.2 | 84.7 | 125.1 |
| Number-average molecular weight | 1256 | 1527 | 2016 | 1999 | 1998 | 1324 | 897 |
| Content of constituent unit (II) [% by mass] | 46.0% | 52.0% | 52.0% | 70.0% | 80.0% | 85.0% | 91.0% |

**[Table 2]**

| | Example 8 | Example 9 | Example 10 | Example 11 | Example 12 | Example 13 | Example 14 |
|---|---|---|---|---|---|---|---|
| Polyol composition | A-8 | A-9 | A-10 | A-11 | A-12 | A-13 | A-14 |
| P-1 | | | 240 | | | | |
| P-2 | | | | | | | |
| P-3 | | | | | | | |
| P-4 | | 295 | | | | | 240 |
| P-5 | 240 | | | | 310 | 20 | |
| P-6 | | | | 240 | | | |
| P-7 | | | | | | | |
| P-8 | | | | | | | |
| P-9 | | | | | | | |
| PE-61 | | | | | 190 | 480 | 260 |
| #102 | | | | | | | |
| PTMG850 | | | | | | | |
| PTMG2000 | | | | | | | |
| N164 | | | 260 | 260 | | | |
| P2010 | 260 | | | | | | |
| PCL208 | | 205 | | | | | |
| PCL320 | | | | | | | |
| | 500 | 500 | 500 | 500 | 500 | 500 | 500 |
| Hydroxy value [mg-KOH/g] | 55.7 | 88.3 | 83.8 | 85.3 | 55.5 | 56.1 | 56.0 |
| Number-average molecular weight | 2016 | 1270 | 1339 | 1315 | 2020 | 2002 | 2005 |
| Content of constituent unit (II) [% by mass] | 52.0% | 41.0% | 52.0% | 52.0% | 38.0% | 96.0% | 52.0% |

**[Table 3]**

| | Example 15 | Example 16 | Example 17 | Example 18 | Comparative Example 1 | Comparative Example 2 |
|---|---|---|---|---|---|---|
| Polyol composition | A-15 | A-16 | A-17 | A-18 | B-1 | B-2 |
| P-1 | | | | | | |
| P-2 | | | | | | |
| P-3 | | | | | 500 | |
| P-4 | | | | | | |
| P-5 | | | | | | |
| P-6 | | | | | | |
| P-7 | | | | | | |
| P-8 | 500 | | 400 | 350 | | |
| P-9 | | 500 | | | | |
| PE-61 | | | 100 | | | |
| #102 | | | | | | |
| PTMG850 | | | | | | |
| PTMG2000 | | | | | | |
| N164 | | | | | | |
| P2010 | | | | | | 500 |
| PCL208 | | | | | | |
| PCL320 | | | | 150 | | |
| | 500 | 500 | 500 | 500 | 500 | 500 |
| Hydroxy value [mg-KOH/g] | 55.8 | 56.0 | 55.9 | 64.3 | 56.3 | 56.1 |
| Number-average molecular weight | 2011 | 2004 | 2009 | 2007 | 1993 | 2000 |
| Content of constituent unit (II) [% by mass] | 60.0% | 60.0% | 68.0% | 72.0% | 0.0% | 100.0% |

The abbreviations in Tables 1 to 3 are as follows.
PTMG850: PTMG850 (manufactured by Mitsubishi Chemical Corp., polytetramethylene ether glycol, number-average molecular weight: approximately 850)
PTMG2000: PTMG2000 (manufactured by Mitsubishi Chemical Corp., polytetramethylene ether glycol, number-average molecular weight: approximately 2000)
#102: Plonon #102 (manufactured by NOF Corp., polypropylene glycol, number-average molecular weight: approximately 1250)
PE-61: Newpol PE-61 (manufactured by Sanyo Chemical Industries, Ltd., polypropylene glycol, number-average molecular weight: approximately 2000)
P2010: Kuraray Polyol P-2010 (manufactured by Kuraray Co., Ltd., poly-3-methyl-1,5-pentylene adipate diol, number-average molecular weight: approximately 2000)
N164: Nippolan 164 (manufactured by Tosoh Corp. polyhexylene adipate diol, number-average molecular weight: approximately 1000)
PCL208: Placcel 208 (manufactured by Daicel Corp., poly-ε-caprolactone diol, number-average molecular weight: approximately 830)
PCL320: Placcel 320 (manufactured by Daicel Corp., poly-ε-caprolactone diol, number-average molecular weight: approximately 2000)

### [Application Example 1] Synthesis of polyurethane film PA-1

In a 500 ml separable flask in which a thermocouple and a condenser were installed, 40 g of the carbonate group-containing polyol composition A-1 synthesized in Example 1, 280 g of dimethylformamide (DMF) (solid content: set to 20% by mass), and 0.32 g of a 1% solution of dibutyltin dilaurate in toluene (50 ppm based on the total mass of 4,4'-diphenyl methane diisocyanate (hereinafter, also referred to as "MDI") and the carbonate group-containing polyol composition) were placed, and warmed in an oil bath of 40°C. While the solution in the flask was stirred at 100 rpm in a nitrogen atmosphere in the flask, 24.6 g of MDI (3.09 times [mol] based on OH [mol] of the carbonate group-containing polyol composition) was added dropwise thereto. The solution in the flask was further stirred for approximately 1.5 hours. The consumption of a theoretical amount was confirmed by the analysis of an isocyanate group concentration to obtain a prepolymer. Subsequently, a necessary amount (5.4 g) of 1,4-butanediol (hereinafter, also referred to as "1,4-BDO") calculated from residual isocyanate was added in divided portions into the flask.

The solution in the flask was stirred for approximately 1 hour. Then, approximately 1 g of ethanol was added thereto, and the solution in the flask was further stirred for 30 minutes to obtain a solution of polyurethane having a number-average molecular weight of 79200.

The obtained polyurethane was added dropwise to the upper part of a glass plate (JIS R3202, 2 mm × 100 mm × 150 mm), which was then coated using a 0.8 to 2.5 mm thick applicator such that a dry film thickness was 50 to 400 µm. The coating was dried for 2 hours on a hot plate having a surface temperature of 60°C and subsequently for 12 hours in an oven of 80°C. The coating was further left standing under constant temperature and humidity conditions of 23°C and 55% RH for 12 hours or longer to obtain polyurethane film PA-1. The obtained polyurethane film PA-1 was subjected to the evaluation of each physical property by the method described above. The evaluation results are shown in Table 4.

### [Application Examples 2 to 18] (Application Examples 8-11 and 18 are reference examples)

Polyurethane films PA-2 to PA-18 were obtained through reaction using the same conditions and method as in Application Example 1 except that the type of each starting material was changed as described in Tables 4 to 6. The obtained polyurethane films PA-2 to PA-18 were subjected to the evaluation of each physical property by the method described above. The evaluation results are shown in Tables 4 to 6.

### [Application Comparative Examples 1 and 2]

Polyurethane films PB-1 and PB-2 were obtained through reaction using the same conditions and method as in Application Example 1 except that the type of each starting material was changed as described in Table 6. The obtained polyurethane films PB-1 and PB-2 were subjected to the evaluation of each physical property by the method described above. The evaluation results are shown in Table 6.

**[Table 4]**

| | Application Example 1 | Application Example 2 | Application Example 3 | Application Example 4 | Application Example 5 | Application Example 6 | Application Example 7 |
|---|---|---|---|---|---|---|---|
| Polyurethane film | PA-1 | PA-2 | PA-3 | PA-4 | PA-5 | PA-6 | PA-7 |
| Polyol composition (g) | A-1 | A-2 | A-3 | A-4 | A-5 | A-6 | A-7 |
| | 40 | 40 | 40 | 40 | 40 | 40 | 40 |
| MDI (g) | 24.6 | 20.2 | 15.3 | 15.5 | 15.5 | 23.6 | 35.1 |
| Hydrogenated MDI (g) | | | | | | | |
| 1,4-BDO (g) | 5.4 | 4.4 | 3.4 | 3.4 | 3.4 | 5.2 | 7.7 |
| IPDA (g) | | | | | | | |
| DMF (g) | 280 | 259 | 235 | 235 | 235 | 275 | 331 |
| DBTL (1% solution in toluene) (g) | 0.32 | 0.30 | 0.28 | 0.28 | 0.28 | 0.32 | 0.38 |
| Number-average molecular weight (Mn) | 79200 | 68000 | 71600 | 64600 | 68500 | 67200 | 70200 |
| Glass transition temperature [°C] | -14.9 | -15.5 | -15.2 | -15.1 | -20.3 | -28.1 | -19.8 |
| Lowtemperature flexibility | △ | ○ | ○ | ○ | ○ | ○ | ○ |
| Chemical resistance | ○ | ○ | ○ | ○ | ○ | ○ | △ |
| Abrasion resistance | ○ | ○ | ○ | ○ | ○ | △ | △ |

**[Table 5]**

| | Application Example 8 | Application Example 9 | Application Example 10 | Application Example 11 | Application Example 12 | Application Example 13 | Application Example 14 |
|---|---|---|---|---|---|---|---|
| Polyurethane film | PA-8 | PA-9 | PA-10 | PA-11 | PA-12 | PA-13 | PA-14 |
| Polyol composition | A-8 | A-9 | A-10 | A-11 | A-12 | A-13 | A-14 |
| | 40 | 40 | 40 | 40 | 40 | 40 | 40 |
| MDI | | 24.3 | 15.0 | 7.4 | 15.3 | 15.4 | 15.4 |
| Hydrogenated MDI | 16.1 | | | | | | |
| 1,4-BDO | | 5.3 | 3.3 | 1.6 | 3.4 | 3.4 | 3.4 |
| IPDA | 6.3 | | | | | | |
| DMF | 250 | 279 | 233 | 196 | 235 | 235 | 235 |
| DBTL (1% solution in toluene) | 0.28 | 0.32 | 0.28 | 0.24 | 0.28 | 0.28 | 0.28 |
| Number-average molecular weight (Mn) | 69900 | 72400 | 68800 | 73500 | 74600 | 94000 | 76100 |
| Glass transition temperature [°C] | -13.8 | -12.3 | -13.1 | -13.0 | -11.2 | -35.1 | -15.2 |
| Low-temperature flexibility | △ | △ | △ | △ | △ | ○ | ○ |
| Chemical resistance | ○ | ○ | ○ | ○ | ○ | △ | ○ |
| Abrasion resistance | ○ | ○ | ○ | ○ | △ | △ | ○ |

**[Table 6]**

| | Application Example 15 | Application Example 16 | Application Example 17 | Application Example 18 | Comparative Application Example 1 | Comparative Application Example 2 |
|---|---|---|---|---|---|---|
| Polyurethane film | PA-15 | PA-16 | PA-17 | PA-18 | PB-1 | PB-2 |
| Polyol composition | A-15 | A-16 | A-17 | A-18 | B-1 | B-2 |
| | 40 | 40 | 40 | 40 | 40 | 40 |
| MDI | 15.4 | 15.4 | 15.4 | 17.7 | 15.4 | 15.5 |
| Hydrogenated MDI | | | | | | |
| 1,4-BDO | 3.4 | 3.4 | 3.4 | 3.9 | 3.4 | 3.4 |
| IPDA | | | | | | |
| DMF | 235 | 235 | 235 | 246 | 235 | 235 |
| DBTL (1% solution in toluene) | 0.28 | 0.28 | 0.28 | 0.29 | 0.28 | 0.28 |
| Number-average molecular weight (Mn) | 79200 | 73200 | 71200 | 58600 | 86000 | 75000 |
| Glass transition temperature [°C] | -15.9 | -15.4 | -15.8 | -12.9 | -6.9 | -36.8 |
| Low-temperature flexibility | ○ | ○ | ○ | △ | × | ○ |
| Chemical resistance | ○ | ○ | ○ | ○ | ○ | × |
| Abrasion resistance | ○ | ○ | ○ | ○ | ○ | × |

The abbreviations in Tables 4 to 6 are as follows.
MDI: 4,4'-diphenyl methane diisocyanate Hydrogenated MDI: 4,4'-methylene biscyclohexyl diisocyanate
1,4-BDO: 1,4-butanediol
IPDA: isophoronediamine
DMF: N,N-dimethylformamide
DBTL: dibutyltin dilaurate

### Industrial Applicability

The carbonate group-containing polyol composition of the present invention is capable of reducing the amount of a solvent used at the time of coating material or polyurethane production (producing high-solid coating materials or polyurethane), for example, and is useful as a starting material of coating materials or polycarbonate-based polyurethane. Polyurethane produced using the carbonate group-containing polyol composition of the present invention has features excellent in lowtemperature flexibility and durability (chemical resistance and abrasion resistance) and can be suitably used in a wide range of fields such as elastic fibers, synthetic or artificial leather, coating materials, and high-performance elastomers.

## Claims

1. A carbonate group-containing polyol composition
having a number-average molecular weight, determined as described in the description, of 300 to 10000, and
comprising a constituent unit (I): a repeat unit represented by the following formula (A) and a constituent unit (II): a repeat unit represented by the following formula (B), wherein
based on the total mass of the constituent unit (I) and the constituent unit (II), a content of the constituent unit (II) is 1% by mass or more and 99% by mass or less:
-(R¹¹-O-CO-O)ₙ₁₁- ... (A)
wherein R¹¹ is a divalent linear, branched or cyclic aliphatic, or aromatic hydrocarbon group having 2 or more and 15 or less carbon atoms, and when the number of R¹¹ is plural, R¹¹ may be the same as or different from each other; and n11 is an arbitrary integer,
-(R²¹-O)ₙ₂₁- ... (B)
wherein R²¹ is a divalent linear, branched or cyclic aliphatic, or aromatic hydrocarbon group having 2 or more and 20 or less carbon atoms, and when the number of R²¹ is plural, R²¹ may be the same as or different from each other; and n21 is an arbitrary integer of 11 or larger.

2. The carbonate group-containing polyol composition according to claim 1, wherein based on the total mass of the constituent unit (I) and the constituent unit (II), the content of the constituent unit (II) is 40% by mass or more and 95% by mass or less.

3. A polyurethane resin composition prepared using
the carbonate group-containing polyol composition according to claim 1 or 2,
a compound having a plurality of isocyanate groups, and
at least one chain extender selected from the group consisting of polyol and polyamine.

4. A film formed from the polyurethane resin composition according to claim 3.

5. A leather-like sheet having the film according to claim 4.

## Patentansprüche

1. Carbonatgruppe(n)-enthaltende Polyolzusammensetzung,
welche ein wie in der Beschreibung beschrieben bestimmtes zahlenmittleres Molekulargewicht von 300 bis 10000 aufweist, und
eine Konstitutionseinheit (I): eine durch die folgende Formel (A) dargestellte Wiederholungseinheit und eine Konstitutionseinheit (II): eine durch die folgende Formel (B) dargestellte Wiederholungseinheit umfasst, wobei
basierend auf der Gesamtmasse der Konstitutionseinheit (I) und der Konstitutionseinheit (II) ein Gehalt der Konstitutionseinheit (II) 1 Massen-% oder mehr und 99 Massen-% oder weniger ist:
-(R¹¹-O-CO-O)ₙ₁₁- (A)
wobei R¹¹ eine zweibindige lineare, verzweigte oder cyclische aliphatische oder aromatische Kohlenwasserstoffgruppe mit 2 oder mehr und 15 oder weniger Kohlenstoffatomen ist, wobei, wenn mehrere R¹¹ vorliegen, die R¹¹ gleich oder voneinander verschieden sein können; und n11 eine beliebige ganze Zahl ist,
-(R²¹-O)ₙ₂₁- (B)
wobei R²¹ eine zweibindige lineare, verzweigte oder cyclische aliphatische oder aromatische Kohlenwasserstoffgruppe mit 2 oder mehr und 20 oder weniger Kohlenstoffatomen ist, und, wenn mehrere R²¹ vorliegen, R²¹ gleich oder voneinander verschieden sein können; und n21 eine beliebige ganze Zahl von 11 oder größer ist.

2. Carbonatgruppe(n)-enthaltende Polyolzusammensetzung nach Anspruch 1, wobei in Bezug auf die Gesamtmasse der Konstitutionseinheit (I) und der Konstitutionseinheit (II) der Gehalt der Konstitutionseinheit (II) 40 Massen-% oder mehr und 95 Massen-% oder weniger ist.

3. Polyurethanharz-Zusammensetzung, hergestellt unter Verwendung
der Carbonatgruppe(n)-enthaltenden Polyolzusammensetzung nach Anspruch 1 oder 2,
einer Verbindung mit einer Vielzahl/Mehrzahl von Isocyanatgruppen, und
mindestens einem Kettenverlängerungsmittel, ausgewählt aus der Gruppe bestehend aus Polyol und Polyamin.

4. Folie, gebildet aus der Polyurethanharz-Zusammensetzung nach Anspruch 3.

5. Lederartiges flächiges Erzeugnis, welches die Folie nach Anspruch 4 aufweist.

## Revendications

1. Composition de polyol contenant un groupe carbonate ayant un poids moléculaire moyen en nombre, déterminé comme décrit dans la description, de 300 à 10 000, et
comprenant une unité constitutive (I) : une unité de répétition représentée par la formule suivante (A) et une unité constitutive (II) : une unité de répétition représentée par la formule suivante (B), dans laquelle
sur la base de la masse totale de l'unité constitutive (I) et de l'unité constitutive (II), une teneur en unité constitutive (II) est supérieure ou égale à 1 % en masse et inférieure ou égale à 99 % en masse :
-(R¹¹-O-CO-O)ₙ₁₁- ... (A)
où R¹¹ est un groupe hydrocarboné aliphatique ou aromatique divalent, linéaire, ramifié ou cyclique ayant au moins 2 et au plus 15 atomes de carbone, et lorsque le nombre de R¹¹ est pluriel, les R¹¹ peuvent être identiques ou différents les uns des autres ; et n11 est un nombre entier arbitraire,
-(R²¹-O)ₙ₂₁- ... (B)
dans laquelle R²¹ est un groupe hydrocarboné aliphatique ou aromatique linéaire, ramifié ou cyclique divalent ayant au moins 2 et au plus 20 atomes de carbone, et lorsque le nombre de R²¹ est pluriel, les R²¹ peuvent être identiques ou différents les uns des autres ; et n21 est un nombre entier arbitraire supérieur ou égal à 11.

2. Composition de polyol contenant un groupe carbonate selon la revendication 1, dans laquelle sur la base de la masse totale de l'unité constitutive (I) et de l'unité constitutive (II), la teneur en unité constitutive (II) est supérieure ou égale à 40 % en masse et inférieure ou égale à 95 % en masse.

3. Composition de résine de polyuréthane préparée en utilisant la composition de polyol contenant un groupe carbonate selon la revendication 1 ou 2,
un composé ayant une pluralité de groupes isocyanate, et
au moins un allongeur de chaîne choisi dans le groupe constitué du polyol et de la polyamine.

4. Film formé à partir de la composition de résine de polyuréthane selon la revendication 3.

5. Feuille semblable au cuir ayant le film selon la revendication 4.
